# EUROPÄISCHE PATENTANMELDUNG

(11) **EP 0 564 816 A1**
(43) Veröffentlichungstag der Anmeldung: **13.10.1993**
(21) Anmeldenummer: 93103364.1
(22) Anmeldetag: 03.03.1993
(51) Int. Cl.: B29C 33/36, F21V 21/10, B60Q 7/00

(54) **Fördervorrichtung für Formenträger zur Herstellung von Formteilen aus Mehrkomponentenkunststoffen**

(30) Priorität: 12.03.1992 DE 4207868
(71) Anmelder: Elastogran GmbH, D-49448 Lemförde (DE)
(72) Erfinder: Dimperl, Peter, W-8000 Muenchen 90 (DE)
(74) Vertreter: Bieberbach, Andreas, Dr.

(57) **Zusammenfassung**

Die Fördervorrichtung wird durch einen Rechteckförderer bestehend aus einer geraden Vorlaufstrecke 1 mindestens einer geraden Rücklaufstrecke 2 und dazwischen liegenden Querförderern 3 und 4 gebildet. Insbesondere die Fördereinrichtung für die Vorlaufstrecke 1 ist in mehrere unabhängig voneinander antreibbare Abschnitte 7 bis 10 unterteilt, um für einen individuellen und unabhängigen Bewegungsablauf zu sorgen. Wenn ein Formenträger beispielsweise im Bereich einer Schleuse 5 am Ende der Vorlaufstrecke 1 ausgeschleust wird, dann kann die auf diese Weise entstandene Lücke immer in diesem Bereich, nämlich an dem Querförderer 3 gehalten werden, um jederzeit ein Einschleusen eines neuen Formenträgers sicherzustellen. Im Bereich der Formfüllung wird eine Lücke zwischen den Formenträgern vermieden.

## Beschreibung

Die Erfindung betrifft eine Fördervorrichtung nach dem Oberbegriff des Patentanspruchs 1.

Derartige Fördervorrichtungen sind, ausgestaltet als Rundtische und als Ovalförderer, bekannt.

Wenn die Fördervorrichtung als Rundtisch ausgebildet ist, dann sind die Formenträger fest auf dem Rundtisch angeordnet und eine unabhängige Bewegung oder Auswechselung eines Formenträgers ohne Unterbrechung des Produktionsprozesses ist nicht möglich. Darüber hinaus beanspruchen derartige Rundtische in Abhängigkeit von ihrem großen Durchmesser sehr viel Raum. Um den Förderer langgestreckten Räumen anzupassen, ist es daher auch schon vorgeschlagen worden, sogenannte Ovalförderer einzusetzen, bei denen die Fördereinrichtung durch eine endlose im Oval verlaufende Förderkette gebildet wird. Bei diesem Ovalförderern ist es schwierig und daher aufwendig, einzelne Formenträger während des Fördervorganges aus- und einzuschleusen. Es ist nicht möglich, Lücken, die durch Ausschleusen einzelner Formenträger entstanden sind, wieder zu schließen.

Der Erfindung liegt daher die Aufgabe zugrunde, eine Fördervorrichtung der eingangs genannten Art zu schaffen, die eine optimale Raumausnutzung auch in Anpassung an vorgegebene Raumverhältnisse ermöglicht und insbesondere ein wenig aufwendiges Ein- und Ausschleusen und Formenträgern sicherstellt und dabei gleichzeitig ein Schließen von Lücken, die durch Ausschleusen entstanden sind, vor allem im Bedienbereich ermöglicht.

Diese Aufgabe wird grundsätzlich durch das Kennzeichen des Anspruchs 1 gelöst.

Erfindungsgemäß erfolgt die Ausbildung der Fördervorrichtung als Rechteckförderer, d.h. es sind zwei nebeneinander liegende gerade und langgestreckte aber gegenläufige Förderstrecken, nämlich die Vorlaufstrecke und die Rücklaufstrecke, vorhanden. Dazwischen sind zwei kurze Querförderer angeordnet, so daß ein Rechteckförderer entsteht, der aber ein kontinuierliches, nicht unterbrochenes Fördern ermöglicht, d.h. auch dieser Rechteckförderer ist ein geschlossener Förderer. Dadurch, daß insbesondere die Vorlaufstrecke, in der die wesentlichen Arbeiten durchgeführt werden, in einzelne unabhängig voneinander antreibbare Abschnitte unterteilt ist, ist es möglich, Lücken zu schließen, d.h. beispielsweise sicherzustellen, daß im Bereich der Füllstation immer ein Formenträger mit einer zum Füllen bereiten Form vorhanden ist. Vorzugsweise an dem Querförderer am Ende der Vorlaufstrecke ist dann ein Ein- und Ausschleusen von Formenträgern möglich. Auf dem Weg bis zur Füllstation kann die hierdurch entstandene Lücke dann durch entsprechende Steuerung der einzelnen unabhängig voneinander antreibbaren Abschnitte der Fördereinrichtung wieder geschlossen werden. Der Rücklaufabschnitt, auf dem im wesentlichen die Reaktion und Aushärtung der Formfüllung erfolgt, kann ebenfalls unabhängig voneinander antreibbare Abschnitte hinsichtlich der Fördereinrichtung aufweisen. Besonders vorteilhaft ist dieses aber im Bereich der Vorlaufstrecke.

Durch die Ausbildung als Rechteckförderer ist es möglich, auch zwei oder mehr Rücklaufstrecken parallel nebeneinander anzuordnen. Hierdurch ist eine Anpassung an gegebene Raumverhältnisse möglich. Da lediglich die Vorlaufstrecke zur Durchführung der verschiedenen Arbeiten gut zugänglich sein muß, können die zwei oder drei Rücklaufstrecken dem Ausreagieren und Aushärten dienen. Die Produktionsgeschwindigkeit kann hierdurch erhöht werden, da ohne größere Anlagenlänge dennoch eine Rücklaufstrecke mit einer großen Gesamtlänge zur Verfügung steht.

Im Bereich der Formfüllung kann die Fördereinrichtung einen verhältnismäßig kurzen, getrennt antreibbaren Abschnitt aufweisen, so daß hier eine erhöhte Positioniergenauigkeit sichergestellt ist, da nur eine geringe Masse bewegt werden muß. Die Aufteilung in die verschiedenen Abschnitte setzt zudem die Belastung der einzelnen Motoren erheblich herab.

Wenn, wie in Anspruch 6 definiert, eine Schleuse vorzugsweise im Bereich des Querförderers am Ende der Vorlaufstrecke vorgesehen ist, so kann die Steuerung der einzelnen Abschnitte der Fördereinrichtung so erfolgen, daß die Lücke immer im Bereich dieser Schleuse gehalten wird. Es ist dann praktisch zu jedem Zeitpunkt des Produktionsablaufes möglich, einen neuen Formenträger einzuschleusen.

Durch die Ausbildung als Rechteckförderer ist die nicht gut zugängliche, während der Förderung auf der Vorlaufstrecke innenliegende Seite der Formenträger dann auf der Rücklaufstrecke gut zugänglich. Die auf der Vorlaufstrecke innenliegende Seite zeigt auf der Rücklauf- und Aushärtstrecke nach außen. Hier können daher Kontrollinstrumente und dergleichen angeordnet werden, die während des Produktionsvorganges ablesbar sind.

In vorteilhafter Weise kann die Vorrichtung so ausgebildet sein, wie in den Ansprüchen 7 und 8 angegeben. Die Druckluftversorgung erfolgt nur im Bedienbereich der Vorlaufstrecke, d.h. so lange zur Betätigung der Formenträger, wie Öffnen und Schließen, Einlegen von Teilen usw. Druckluft erforderlich ist. In bezug auf die Gesamtlänge der Fördervorrichtung ist dieser Bereich, in dem eine Druckluftversorgung erforderlich ist, kurz.

Wenn die Fördervorrichtung so ausgebildet ist, wie in Anspruch 10 angegeben, dann stellen die Drehweichen in den Stromschienen sicher, daß die elektrischen Kabel, die zu den Stromabnehmern führen, nicht durch immer wiederholtes Drehen in eine Drehrichtung schließlich abgedreht werden. Es erfolgt lediglich eine Drehung von 90° vor und zurück. Diese Hin- und Herdrehung vermeidet ein Abdrehen der Kabel.

Im folgenden wird die Erfindung unter Hinweis auf die Zeichnung anhand eines Ausführungsbeispieles näher erläutert.

Es zeigt:
- Fig. 1: eine Draufsicht auf eine Fördervorrichtung nach der Erfindung, ausgebildet als Rechteckförderer;
- Fig. 2: eine Seitenansicht der Fördervorrichtung nach Fig. 1;
- Fig. 3: eine der Fig. 1 entsprechende Draufsicht zur Veranschaulichung der elektrischen Stromversorgung;
- Fig. 4: eine Seitenansicht der Darstellung der Fig. 3;
- Fig. 5: eine Draufsicht einer Einzelheit zur Darstellung der Drehweiche in einer Stromschiene;
- Fig. 6: eine Seitenansicht der Darstellung nach Fig. 5;
- Fig. 7: einen senkrechten Schnitt durch die Fördervorrichtung im Bereich der Druckluftversorgung;
- Fig. 8: eine Seitenansicht der Darstellung nach Fig. 7;
- Fig. 9: eine vergrößerte Ansicht der in Fig. 8 dargestellten Anschlußstutzen für weitere Einzelheiten; und
- Fig. 10: einen Schnitt durch die Darstellung der Fig. 9.

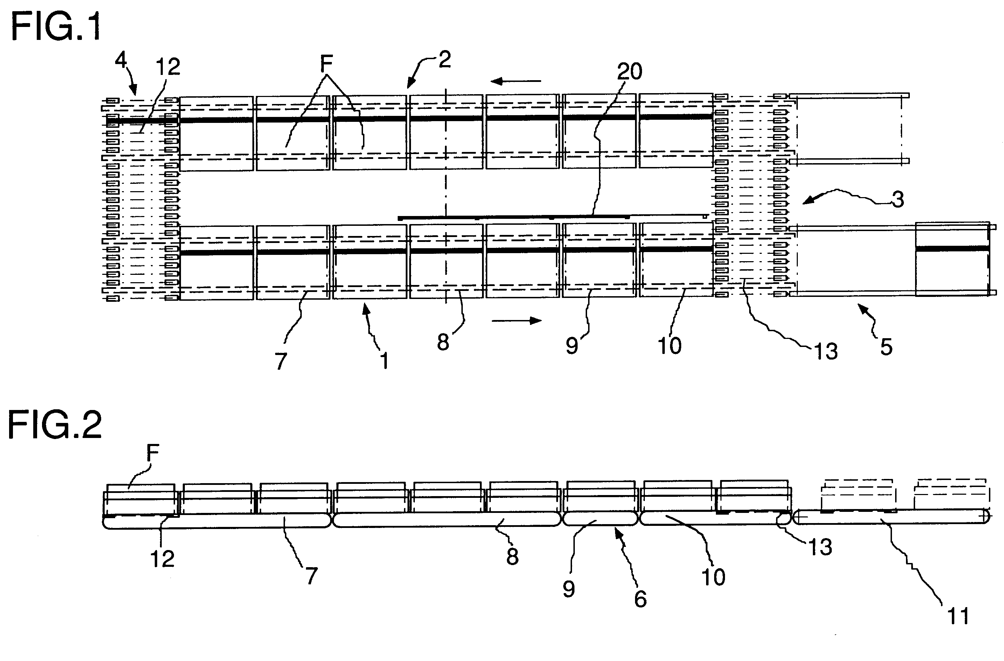

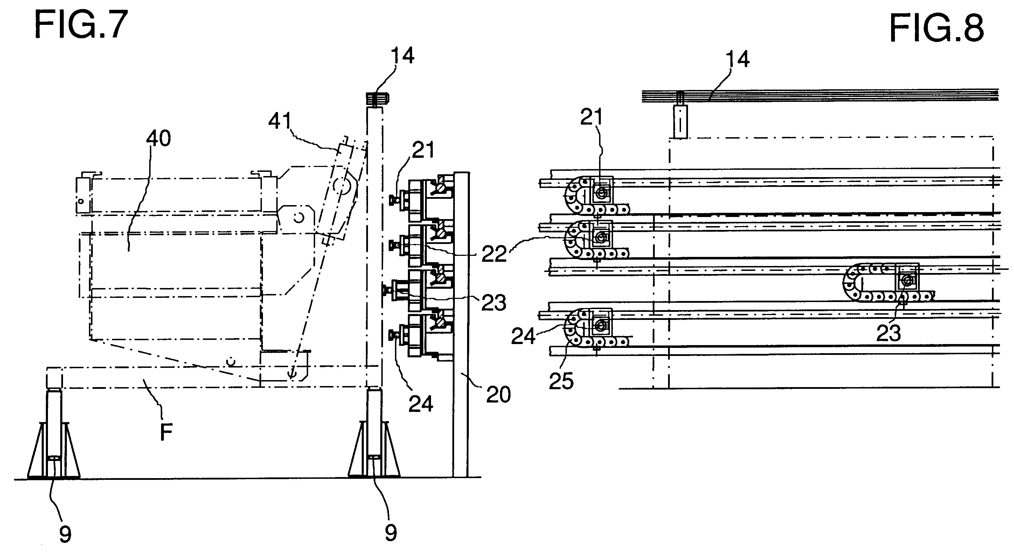

In den Fig. 1 und 2 ist eine Ausführungsform eines Rechteckförderers nach der Erfindung in einer prinzipiellen Darstellung veranschaulicht. Der Rechteckförderer weist zwei langgestreckte parallele Förderstrecken 1 und 2 auf, deren Förderrichtung gegenläufig ist. Die Vorlaufstrecke ist mit 1 und die Rücklaufstrecke mit 2 bezeichnet. Zwischen diesen langgestreckten geraden Abschnitte befinden sich die Querförderer 3 und 4. Im Bereich des Querförderers 3 am Ende der Vorlaufstrecke 1 ist eine Schleuse 5 vorgesehen. Auf dem Förderer sind eine Anzahl von Formenträgern F angeordnet, die, wie in Fig. 7 ersichtlich, eine Form 40 tragen und die durch einen pneumatischen Zylinder 41 geöffnet und geschlossen werden. Es ist möglich, entweder in die geschlossene oder in die offene Form das vorher in einer nicht gezeigten Mischvorrichtung gemischte Kunststoffmaterial einzugeben. Es ist auch möglich, Teile in die Form vor dem Füllen einzulegen.

Insbesondere beim Betrachten der Fig. 2 wird deutlich, daß die eigentliche Bewegung der Formenträger im Bereich der Vorlaufstrecke 1 durch Kettenförderer durchgeführt wird.

Diese Kettenförderer bilden unabhängig voneinander antreibbare Abschnitte 7, 8, 9 und 10. Der Kettenförderer 11 liegt im Bereich der Schleuse 5. Der relativ kurze Kettenförderer 9 liegt im Bereich der Füllstation, d.h. dort, wo es auf eine besonders genaue Bewegung des zu füllenden Formträgers ankommt.

Die Rücklaufstrecke 2 ist im Prinzip ebenso ausgebildet, wobei es hier nicht unbedingt erforderlich ist, eine Aufteilung in eine entsprechende Anzahl von unabhängig voneinander antreibbaren Abschnitten vorzunehmen.

Die Querförderer 3 und 4 werden durch Rollenförderer 12 und 13 gebildet. Diese Rollenförderer 12 und 13 heben die Formenträger geringfügig an, so daß sie aus dem Eingriff mit dem Kettenförderer 10 bzw. 12 herausbewegt werden und so eine ungehinderte Bewegung zu der anderen Förderstrecke möglich ist.

Nicht dargestellt ist in Fig. 1 eine weitere Rücklaufstrecke parallel neben der gezeigten Rücklaufstrecke 2. Dieses ist aber ohne weiteres möglich, um diese Rücklaufstrecke, auf der das Aushärten und Ausreagieren erfolgt, entsprechend zu verlängern.

Die einzelnen Abschnitte 7 bis 10 der Vorlaufstrecke und die entsprechenden nicht gezeigten Abschnitte der Rücklaufstrecke 2 können so unabhängig voneinander angetrieben werden, daß die durch Ausschleusen eines Formenträgers im Bereich der Schleuse 5 entstehende Lücke wieder geschlossen wird, so daß die Lücke immer im Bereich der Schleuse vorhanden ist und dort zu jedem Zeitpunkt ein neuer Formenträger eingeschleust werden kann. Auch wird hierdurch vermieden, daß im Bereich des Abschnittes 6, in dem das Füllen erfolgt, eine Lücke vorhanden ist. Hierdurch wird u.a. die Unfallgefahr herabgesetzt.

Je nach Dimensionierung und Ausbildung des Rechteckförderers ist eine Anpassung an vorgegebene Raumverhältnisse und damit eine optimale Raumausnutzung möglich. Ein Ein- und Ausschleusen erfolgt ohne Produktionsunterbrechung und praktisch zu jedem Zeitpunkt. Die im Bereich der Vorlaufstrecke innenliegenden Seiten der Formenträger liegen im Bereich der Rücklaufstrecke außen, so daß sie hier zugänglich sind.

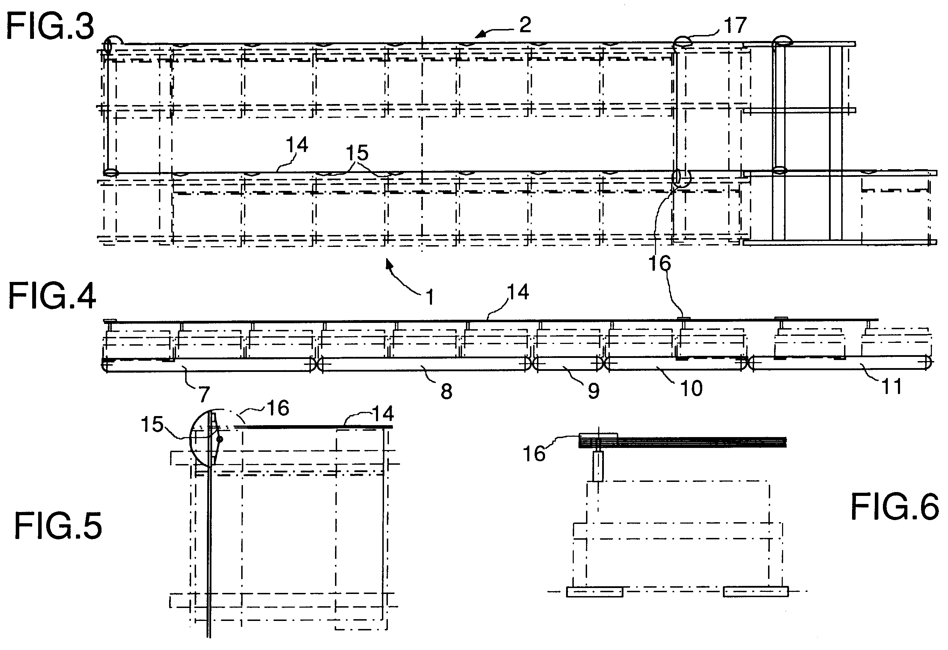

Aus den Fig. 3 und 6 wird deutlich, wie die Stromversorgung der Formenträger erfolgt. Neben den einzelnen Förderstrecken ist eine ebenfalls grundsätzlich rechteckig ausgebildete Stromschiene 14 mit mehreren übereinanderliegenden Polen vorgesehen. An jedem Formenträger befindet sich ein Doppelstromabnehmer 15, der entsprechend in die Stromschiene 14 eingreift. Im Bereich der Querförderer ist die Stromschiene mit Drehweichen 16 versehen, die um 90° vor- und zurückschwenkbar sind. Wenn ein Stromabnehmer 15 in die Drehweiche 16 (Fig. 3) eingefahren ist und eine Querförderung erfolgen soll, schwenkt diese Drehweiche 16 um 90°. Wenn dieser Formenträger dann die Rücklaufstrecke 2 erreicht hat, schwenkt die dort angeordnete Drehweiche 17 um 90° zurück in die in Fig. 3 gezeigte Stellung. Hierdurch wird das Kabel, das zu dem Stromabnehmer 15 führt, lediglich um jeweils 90° vor und zurück und nicht fortlaufend in die gleiche Richtung gedreht. Ein Abdrehen des Kabels wird dadurch vermieden. Entsprechende Drehweichen sind am Ende der Rücklaufstrecke 2 und im Bereich der Schleuse 3 vorgesehen.

In den Fig. 7 bis 10 ist die Druckluftversorgung für die Formenträger F dargestellt. Zur Durchführung der verschiedenen Bewegungen des Formenträgers, wie Öffnen und Schließen und zum Füllen der Formen, ist es erforderlich, die Formenträger mit Druckluft zu versorgen. Zu diesem Zweck ist im Bedienbereich im Innenraum des Rechteckförders (siehe Fig. 1) eine mit 20 bezeichnete Druckluftversorgung angeordnet, die aber nur in diesem Bereich, d.h. dort und zu dem Zeitpunkt Druckluft zuführt, wenn diese gebraucht wird.

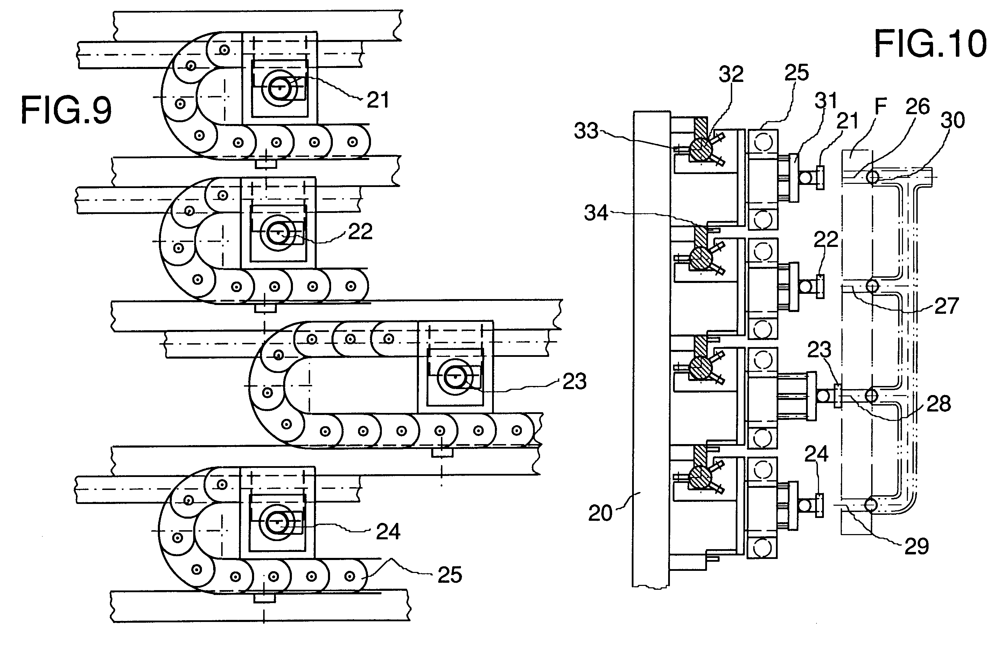

Die Druckluftversorgung 20 wird im wesentlichen durch beispielsweise vier übereinander angeordnete Anschlußstutzen 21 bis 24 gebildet. Diesen Anschlußstutzen zugeordnet sind Adapter 26 bis 29 mit Rückschlagventilen 30 an jedem Formenträger (Fig. 10).

Die Verbindung eines ausgewählten Anschlußstutzens, beispielsweise 23, mit dem Adapter 28, erfolgt durch einen pneumatischen Zylinder 31 mit Verdrehsicherung. In der Darstellung der Fig. 10 ist der Anschlußstutzen 23 vorgeschoben, so daß eine Verbindung mit dem Adapter 28 erfolgt ist. Wenn diese Verbindung hergestellt ist, wird dieser Anschlußstutzen 23 mit dem sich bewegenden Formenträger F mitgeschleppt, so lange, bis die Druckversorgung nicht mehr erforderlich ist und die Verbindung wieder getrennt wird. Der Anschlußstutzen wird dann durch einen nicht gezeigten Seilzug in seine Ausgangsstellung zurückbewegt.

Die Druckluftzuführung zu jedem Anschlußstutzen erfolgt durch einen Schlauch, der in einem flexiblen Kanal 25 angeordnet ist. Hierdurch kann der Anschlußstutzen ungehindert seinen Bewegungshub durchführen, und es ist eine sichere und störungsfreie Versorgung mit Druckluft gewährleistet. Der Anschlußstutzen mit dem flexiblen Kanal bewegt sich an einer ortsfesten Schiene 32 mit Hilfe von Rollen 33 und 34, die eine drehmomentensteife Abstützung gewährleisten. Es sind in Fig. 4 vier Schienen für vier Anschlußstutzen dargestellt. Die Anzahl der Anschlußstutzen und Adapter kann so gewählt werden, wie es für den Produktionsablauf am zweckmäßigsten ist.

Der erfindungsgemäße Rechteckförderer nutzt einen vorgegebenen Hallenraum optimal aus und ermöglicht einen großen Bedienungskomfort mit vielen Variationsmöglichkeiten, ohne daß eine Unterbrechung des Produktionsprozesses erforderlich ist.

## Patentansprüche

1. Fördervorrichtung für Formenträger zur Herstellung von Formteilen aus Mehrkomponentenkunststoffen, insbesondere Polyurethan, mit einer Fördereinrichtung zur Bewegung der Formenträger auf einer geschlossenen Förderstrecke, dadurch gekennzeichnet, daß die geschlossene Förderstrecke in eine gerade Vorlaufstrecke (1) und eine parallel zu dieser verlaufende gerade Rücklaufstrecke (2) mit dazwischenliegenden Querförderern (3, 4) zur Bildung eines Rechteckförderers aufgeteilt ist, und daß die Fördereinrichtung für die Vorlaufstrecke (1) in mehrere unabhängig voneinander antreibbare Abschnitte (7 bis 10) unterteilt ist.

2. Fördervorrichtung nach Anspruch 1, dadurch gekennzeichnet, daß die Förderstrecke auch auf der geraden Rücklaufstrecke (2) in mehrere unabhängig voneinander antreibbare Abschnitte unterteilt ist.

3. Fördervorrichtung nach Anspruch 1 oder 2, dadurch gekennzeichnet, daß mindestens zwei gerade Rücklaufstrecken parallel nebeneinander angeordnet sind.

4. Fördervorrichtung nach einem oder mehreren der vorstehenden Ansprüche, dadurch gekennzeichnet, daß die Fördereinrichtung auf der Vorlaufstrecke (1) und der Rücklaufstrecke (2) durch eine den unabhängig voneinander antreibbaren Abschnitten (7 bis 10) entsprechende Anzahl von Kettenförderern mit senkrecht stehender Umlenkung gebildet ist.

5. Fördervorrichtung nach einem oder mehreren der vorstehenden Ansprüche, dadurch gekennzeichnet, daß die Querförderer (3, 4) durch Rollenförderer (12, 13) gebildet sind, die die Formenträger (F) über das Niveau der Kettenförderer anheben.

6. Fördervorrichtung nach einem oder mehreren der vorstehenden Ansprüche, dadurch gekennzeichnet, daß im Bereich der Querförderer (3, 4) Schleusen (5) zum Ein- und Ausschleusen von Formenträgern (F) vorgesehen sind.

7. Fördervorrichtung nach einem oder mehreren der vorstehenden Ansprüche, dadurch gekennzeichnet, daß im Bedienbereich der Vorlaufstrecke (1) eine Druckluftversorgung (20) für die Formenträger (F) vorgesehen ist, die eine Anzahl von übereinander angeordneten, mitschleppbaren Anschlußstutzen (21 bis 24) aufweist, die jeweils mit einem Adapter einer Adaptergruppe (28 bis 29) an dem Formenträger (F) verbindbar sind.

8. Fördervorrichtung nach Anspruch 7, dadurch gekennzeichnet, daß die Druckluft jedem Anschlußstutzen (21 bis 24) über einen in einem flexiblen Kanal (25) angeordneten Schlauch zuführbar ist.

9. Fördervorrichtung nach Anspruch 7 oder 8, dadurch gekennzeichnet, daß die Druckluftversorgung (20) im Innenraum zwischen Vorlaufstrecke (1) und Rücklaufstrecke (2) angeordnet ist.

10. Fördervorrichtung nach einem oder mehreren der vorstehenden Ansprüche, dadurch gekennzeichnet, daß zur Versorgung der Formenträger (F) mit elektrischer Energie ortsfeste Stromschienen (14) neben den Förderstrecken und Stromabnehmer (15) an den Formenträgern (F) vorgesehen sind, und daß an den Querförderern (3, 4) in den Stromschienen Drehweichen (16, 17) vorgesehen sind, die um ± 90° vor- und zurückschwenkbar sind.
